# EUROPÄISCHE PATENTSCHRIFT

(11) **EP 2 665 346 B1**
(45) Veröffentlichungstag und Bekanntmachung des Hinweises auf die Patenterteilung: **17.07.2019**
(21) Anmeldenummer: 13168123.1
(22) Anmeldetag: 16.05.2013
(51) Int. Cl.: H05B 37/02, H02J 3/14, H02J 3/26

(54) **Vorrichtungen und Verfahren zur Phasenwahl für eine Leuchte**
Devices and methods for phase selection for a light
Dispositifs et procédés de sélection des phases pour une lampe

(30) Priorität: 16.05.2012 DE 102012208297
(43) Veröffentlichungstag der Anmeldung: 20.11.2013
(73) Patentinhaber: Trilux GmbH & Co. KG, 59759 Arnsberg (DE)
(72) Erfinder: Müller, Sven, 58706 Menden (DE)
(74) Vertreter: Lippert Stachow Patentanwälte Rechtsanwälte

(56) Entgegenhaltungen:
- DE-A1- 19 611 161
- DE-A1-102005 059 612
- US-A1- 2012 078 428

## Beschreibung

Die Erfindung betrifft allgemein eine elektrische Anordnung mit Phasenwahl zur Stromversorgung einer Leuchte, insbesondere einer Schienen- oder Lichtbandleuchte.

Schienen- oder Lichtbandleuchten umfangreicher Beleuchtungsanlagen, etwa im industriellen Bereich wie beispielsweise in Werkshallen, werden meist an ein Dreiphasen-Stromnetz angeschlossen. Hierzu wird üblicherweise ein mehrpoliges Flachbandkabel als Durchgangsverdrahtung verlegt, an welches eine Mehrzahl aneinandergereihter Schienen- oder Lichtbandleuchten angeschlossen werden.

Aus Kostengründen werden herkömmliche, d.h. einphasig zu betreibende Betriebsgeräte für die Leuchtmittel eingesetzt. Um dennoch eine möglichst gleichmäßige Belastung des Dreiphasen-Stromnetzes durch jeweils nur an eine Phase angeschlossene Betriebsgeräte zu erzielen, umfassen bekannte Stromversorgungsanordnungen eine Vorrichtung zur Phasenwahl, welche das wahlweise Verbinden des Betriebsgeräts mit einem bestimmten Phasenleiter der mehrphasigen Versorgungsleitung ermöglicht. So kann beim Anschluss vor Ort eine möglichst gleichmäßige Verteilung auf die unterschiedlichen Phasen voreingestellt werden. Mit den zu erwartenden stetig verbesserten Wirkungsgraden der Leuchtmittel wird dem Lastausgleich zukünftig größere Bedeutung beikommen, um eine durch reduzierte Leistungsaufnahme bedingte Lastasymmetrie bei Erneuerung einzelner Leuchtmittel zu verhindern.

Schaltungen zum zentralisierten Lastausgleich der einzelnen Phasen eines mehrphasigen Versorgungsnetzes sind in der Elektrotechnik bekannt. Eine solche Schalteinrichtung beschreibt z.B. das Patent US 5'604'385 oder die Anmeldung US 2012/0078428. Mit solchen Zentralschaltungen ist ein echter Lastausgleich innerhalb einer Beleuchtungsanlage mit einer Vielzahl Leuchten nicht ohne Weiteres möglich.

Zum Anschluss einer Schienenleuchte an eine mehrphasige Versorgungsleitung ist ein Steckverbinder mit einer Vorrichtung zur Phasenwahl aus der Offenlegungsschrift DE 41 27 899 bekannt. Hierbei wird vorgeschlagen, eine Phasenwahl durch manuelle Verschiebung des Phasensteckerstifts im Steckerteil zu ermöglichen.

Ein weiterer Ansatz ist beispielsweise aus der Offenlegungsschrift DE 38 18 078 bekannt. Die DE 38 18 078 schlägt vor, einen Drehschalter zur Phasenwahl in den Steckverbinder zu integrieren, welcher zum elektrischen Anschluss an eine fünfpolige Flachband-Versorgungsleitung ausgelegt ist. Eine Stromversorgungsanordnung mit Steckverbinder gemäß DE 38 18 078 erlaubt eine kostengünstige Herstellung und eine einfache manuelle Phasenwahl beim Verdrahten der einzelnen Leuchten.

Eine Stromversorgungsanordnung zur Phasenwahl ist beispielsweise im Leuchteneinsatz für Schienenleuchten vorgesehen, welcher unter der Produktnummer 7692/58 E von der Fa. TRILUX erhältlich ist. Dieser Leuchteneinsatz hat ein elektronisches Vorschaltgerät als einphasiges Betriebsgerät für zwei Leuchtstoffröhren. Die Versorgungsanordnung hat einen Steckverbinder zum elektrischen Anschluss an ein Dreiphasen-Versorgungsnetz. In diesen Steckverbinder ist eine Vorrichtung zur Phasenwahl integriert, ähnlich den oben beschriebenen Vorrichtungen aus DE 41 27 899 oder DE 38 18 078, um den zwecks einphasiger Versorgung des Betriebsgeräts bestimmten Phasenleiter zu wählen.

Nachteilig bei Stromversorgungsanordnungen mit Phasenwahl gemäß vorgenanntem Stand der Technik ist jedoch, dass bei Änderung der Belastung der einzelnen Phasenleiter oder bei Ausfall einer bestimmten Phase stets ein manueller Eingriff mit verhältnismäßig großem Aufwand an jeder betroffenen Leuchte erforderlich ist.

Aus der Offenlegungsschrift DE 10 2005 059 612 ist eine Schaltungseinrichtung für ein Straßenbeleuchtungssystem mit mindestens zwei Phasen bekannt. Hierbei ist eine Schaltungseinrichtung zum Betrieb einer einflammigen Leuchte bei jedem Beschaltungszustand der mehrflammigen Leuchten vorgesehen. Die Schaltungseinrichtung schaltet im alternierenden Betrieb der mehrflammigen Leuchten selbsttätig die jeweils spannungsführende Phase zum Leuchtmittel der einflammigen Leuchte durch. Eine freie Phasenwahl zum Lastausgleich zwischen den einzelnen Phasen ist mit dieser Schaltungseinrichtung nicht möglich.

Die Offenlegungsschrift DE 196 11 161 beschreibt eine Sicherheitsbeleuchtungsanlage mit einer Phasenüberwachung und einem Umschalter für eine Phasenauswahl, welche im Störungsfall diejenige Phase wählt, bei welcher eine ungestörte Netzspannung anliegt. Auch mit dieser Vorrichtung ist kein Lastausgleich zwischen den einzelnen Phasen innerhalb der Beleuchtungsanlage möglich.

Eine Aufgabe der vorliegenden Erfindung ist es mithin, eine Stromversorgungsanordnung für eine Leuchte vorzuschlagen, welche die Phasenwahl ohne manuellen Eingriff an der jeweiligen Leuchte ermöglicht und einen Lastausgleich ermöglicht. Dies wird erzielt durch eine Leuchte mit den Merkmalen gemäß Anspruch 1. Ein Verfahren zur automatischen Phasenwahl gemäß Anspruch 5 ermöglicht den automatischen Lastausgleich.

In einer besonders einfachen Gestaltung zeichnet sich die erfindungsgemäße Lösung dadurch aus, dass zur Phasenwahl ein Phasenwahlschalter vorgesehen wird, welcher elektronisch steuerbar ausgeführt ist und somit einen Steuereingang zur elektronischen Ansteuerung aufweist. Ein Phasenwahlschalter im Sinne der Erfindung kann durch das Betriebsgerät angesteuert werden und wird vorzugsweise als separate Komponente zwischen einem herkömmlichen elektrischen Verbinder für die Versorgungsleitung und einem herkömmlichen Betriebsgerät angeschlossen, könnte aber auch in ein speziell angepasstes Betriebsgerät oder etwa in den Verbinder integriert werden. Als Wahlschalter sind vorliegend demnach nicht hauptsächlich solche Schalter zu verstehen, welche mechanisch den Schaltzustand verändern, sondern ganz allgemein Vorrichtungen, welche die Funktion eines Wahlschalters erfüllen, d.h. auch elektromechanische Relais, Halbleiterschalter usw. In jedem Fall ist der Phasenwahlschalter in der Anordnung schaltungstechnisch zwischen den Anschlusskontakten des Verbinders und dem eigentlichen Betriebsgerät vorgesehen.

Diese Gestaltung ermöglicht es, den Phasenleiter, welcher zur einphasigen Versorgung des Betriebsgeräts bestimmt ist, durch elektronische Ansteuerung des Phasenwahlschalters über den Steuereingang zu wählen. Demnach ist ein manueller Eingriff zur Betätigung des Wahlschalters oder eine Umstellung der Kontakte am Verbinder nicht erforderlich. Der erfindungsgemäße Phasenwahlschalter kann demnach automatisch, insbesondere durch Fernbedienung oder durch eine selbsttätige Steuervorrichtung innerhalb der Versorgungsanordnung, betätigt werden. Der Bediener bzw. Techniker kann also ohne physischen Eingriff an der Leuchte die gewünschte Phase auswählen. Dies vereinfacht insbesondere den Betrieb großer Beleuchtungsanlagen erheblich.

Erfindungsgemäß umfasst die Versorgungsanordnung zur Betätigung des Phasenwahlschalters eine elektronische Steuereinheit, vorzugsweise eine integrierte Steuerschaltung, welche zur elektronischen Ansteuerung des Phasenwahlschalters über den Steuereingang in das Betriebsgeräts integriert ist oder zu diesem Zweck mit dem Betriebsgerät verbunden ist. Bevorzugt wird eine digitaltechnische Steuerschaltung, insbesondere ein Mikrokontroller vorgesehen. Geeignet kann jedoch auch eine andere anwendungsspezifisch konfigurierbare bzw. programmierbare integrierte Schaltung (IC) sein, beispielsweise ein ASIC, ein DSP oder ein FPGA.

Die elektronische Steuereinheit kann unter Ausnutzung bereits vorhandener Funktionalität der Betriebsgerätesteuerung des Betriebsgeräts realisiert werden. Ferner kann auch der Phasenwahlschalter als getrenntes Bauteil der Leuchte oder aber als Bestandteil des Betriebsgeräts realisiert sein.

In vorteilhafter Ausführung weist die Stromversorgungsanordnung der Leuchte Mittel zur Ermittlung der Leistungsaufnahme des Betriebsgeräts oder des bzw. der Leuchtmittel auf. Hierzu kann eine die Last messende Betriebsgerätesteuerung im Betriebsgerät genutzt werden, welche in elektronischen Vorschaltgeräten oft bereits vorliegt. Alternativ oder ergänzend kann eine zusätzliche Messvorrichtung am oder im Phasenwahlschalter vorgesehen werden.

Die Verwendung einer elektronischen Steuerschaltung ermöglicht insbesondere eine zweckmäßige Anbindung der Versorgungsanordnung an einen Datenbus, welcher einen Datenaustausch mit der Steuerschaltung, beispielsweise über Kabel oder Funk, ermöglicht.

Erfindungsgemäß ist eine digitale Schnittstelle vorgesehen zur Datenverbindung bzw. zum Datenaustausch mit anderen Steuerschaltungen oder einer Zentralsteuerung über einen digitalen Datenbus. Bevorzugt wird in industriellen Anwendungen ein kabelgebundener Datenbus verwendet, um elektromagnetische Störungen zu vermeiden.

Alternativ oder ergänzend zur Fernsteuerung des Phasenwahlschalters über einen Datenbus ist eine zweckmäßige Ausführung der elektronischen Steuerschaltung bzw. Steuereinheit so, dass diese zur selbsttätigen Bestimmung des Phasenleiters zur einphasigen Versorgung des Betriebsgeräts und entsprechenden Ansteuerung des Phasenwahlschalters ausgeführt ist. Es kann beispielsweise bei Ausfall oder Fehlen des Datenbus eine rein zufallsbasierte Auswahl des Phasenleiters erfolgen, um statistisch bzw. im Mittel zumindest bei Anlagen mit einer großen Anzahl einzelner Leuchten eine Gleichverteilung der Belastung der einzelnen Phasen zu erzielen.

Die vorgeschlagene Stromversorgungsanordnung mit Phasenwahl in der Leuchte kann auf verschiedene Arten umgesetzt werden. Das Betriebsgerät kann die elektronische Steuereinheit umfassen, z.B. als Funktionseinheit, welche durch den Mikrocontroller des Betriebsgeräts realisiert wird. Entsprechend kann das Betriebsgerät einen Steuerausgang zur Ansteuerung des Phasenwahlschalters aufweisen. Ebenfalls möglich ist eine Ausführung, in welcher alle Funktionen zur Phasenwahl vom Betriebsgerät wahrgenommen werden. In dieser Ausführung ist der steuerbare Phasenwahlschalter in das Betriebsgerät integriert und die Betriebsgerätesteuerung, insbesondere ein Mikrocontroller des Betriebsgeräts, bildet funktional die Steuereinheit.

Erfindungsgemäß umfasst die Versorgungsanordnung auch ein Betriebsgerät zur Versorung von einem oder mehreren Leuchtmitteln einer Leuchte, umfassend eine digitale Schnittstelle zur Datenverbindung des Betriebsgeräts mit einer Zentralsteuerung über einen digitalen Datenbus, insbesondere über einen DALI-Bus.

Gemäß einem ersten Aspekt kann das Betriebsgerät sich dadurch auszeichnen, das es die elektronische Steuereinheit umfasst und einen Steuerausgang zur Ansteuerung des Phasenwahlschalters aufweist.

Die Erfindung umfasst gemäß einem zweiten Aspekt ein entsprechendes Betriebsgerät mit einem Verbinder zum Anschluss an eine mehrphasige Versorgungsleitung mit mehreren Phasenleitern. Das Betriebsgerät gemäss diesem zweiten Aspekt zeichnet sich aus durch eine Vorrichtung zur Phasenwahl mit einem elektronisch steuerbaren Phasenwahlschalter zum wahlweisen Verbinden des Betriebsgeräts mit einem bestimmten Phasenleiter der mehrphasigen Versorgungsleitung, wobei das Betriebsgerät zur elektronischen Ansteuerung des Phasenwahlschalters ausgeführt ist. Hierdurch wird der Phasenleiter, welcher zur einphasigen Versorgung des Betriebsgeräts bestimmt ist, durch das Betriebsgerät selbst wählbar.

Grundsätzlich sind unterschiedliche Arten der Ausführung des Phasenwahlschalters geeignet. Zweckmäßig ist der Phasenwahlschalter elektromechanisch oder halbleitertechnisch ausgeführt. Eine elektromechanische Ausführung, beispielsweise in der Art eines Relais, hat den Vorteil der galvanischen Trennung vom Versorgungsnetz. Die halbleitertechnische Ausführung, beispielsweise unter Verwendung von Leistungstransistoren, kann kostengünstiger und/oder robuster sein.

Um zusätzlich zur automatischen Phasenwahl auch eine fernbediente Abschaltung, etwa zu Sicherheitszwecken bei Wartungsarbeiten, zu ermöglichen, ist es vorteilhaft, wenn der Phasenwahlschalter eine Ausschaltstellung aufweist, bei welcher das Betriebsgerät spannungsfrei geschaltet ist, d.h. mit keinem der Phasenleiter verbunden ist.

Die erfindungsgemäße Lösung eignet sich ohne Weiteres zum Einbau in ein Lichtbandmodul oder in eine Schienenleuchteneinheit.

Ferner ermöglicht die vorgeschlagene Versorgungsanordnung bzw. das vorgeschlagene Betriebsgerät vorteilhafte Verfahren zur automatischen Phasenwahl, insbesondere zum Notbetrieb bei Ausfall einer Phase und/oder zur Erzeugung einer näherungsweise gleich verteilten Auslastung der spannungsführenden bzw. verfügbaren Phasenleiter.

Bei Ausfall ist es zweckmäßig, wenn zunächst eine Überwachung oder Ermittlung der Verfügbarkeit der einzelnen Phasenleiter der mehrphasigen Versorgungsleitung erfolgt und hierauf gründend, ggf. durch die jeweilige Steuerschaltung bzw. Steuereinheit, eine elektronische Ansteuerung des Phasenwahlschalters jeder Leuchte erfolgt, so dass ein noch verfügbarer, d.h. Spannung führender Phasenleiter gewählt wird. So können nach Abschluss des Verfahrens zur automatischen Einleitung des Notbetriebs alle Leuchten von nicht ausgefallenen Phasenleitern versorgt werden. Nach Behebung des Ausfalls kann durch analoges Verfahren auch automatisch wieder die Ursprungskonfiguration, d.h. die ursprüngliche Verteilung der Leuchte auf die einzelnen Phasen hergestellt werden.

Zur automatischen Lastverteilung ist es zweckmäßig, eine Ermittlung des Belastungszustands der einzelnen Phasenleiter auszuführen. Basierend auf dieser Ermittlung erfolgt dann die elektronische Ansteuerung des Phasenwahlschalters jeder Leuchte zur Auswahl eines Phasenleiters so, dass eine über die Phasenleiter näherungsweise gleich verteilte Belastung durch die Leuchten erzielt wird.

Bevorzugt erfolgt die Ermittlung des Belastungszustands der einzelnen Phasenleiter der Versorgungsleitung und gegebenenfalls auch die Ermittlung der Verfügbarkeit der einzelnen Phasenleiter der Versorgungsleitung dezentral, insbesondere anhand der Mittel zur Ermittlung der Leistungsaufnahme in der jeweiligen Stromversorgungsanordnung der einzelnen Leuchten.

Besonders zweckmäßig erfolgt eine automatische Phasenwahl durch Ermitteln der Leistungsaufnahme in den einzelnen Leuchten und auf dieser Grundlage die elektronische Ansteuerung des Phasenwahlschalters jeder Leuchte zur Auswahl eines Phasenleiters, d.h. der Lastausgleich erfolgt auf Grundlage der dezentral ermittelten Leistungsaufnahmen der einzelnen Leuchten. Auf diese Weise kann automatisch und zu beliebigen Zeitpunkten eine über die verfügbaren Phasenleiter näherungsweise gleich verteilte Belastung erzielt werden.

In einer anderen Ausführung werden die vorgenannte Ermittlung der Verfügbarkeit und/oder Belastung sowie die elektronische Ansteuerung jeder Leuchte von einer Zentralsteuerung ausgeführt, mit welcher die Stromversorgungsanordnung jeder Leuchte über einen Datenbus verbunden ist. Alternativ kann die Steuereinheit selbst zur Kommunikation direkt mit anderen Steuereinheiten und zur Erzielung einer dezentralen Steuerung ausgeführt sein. So kann auch ohne Zentralsteuerung die Aushandlung einer optimalen Lastverteilung erfolgen, insbesondere bei Ausfall einer Phase.

Unabhängig von einer zentralen oder dezentralen Lösung wird die ermittelte Leistungsaufnahme in einer Leuchte durch die Steuereinheit dieser Leuchte anhand einer Datenverbindung übermittelt, insbesondere den anderen der mehreren Leuchten und/oder einer Zentralsteuerung.

Die Erfindung betrifft schließlich auch ein Beleuchtungssystem zur automatischen Phasenwahl mit mehreren Leuchten gemäß der vorliegenden Beschreibung.

Weitere Vorteile und Merkmale der Erfindung ergeben sich aus der nachfolgenden Beschreibung bevorzugter Ausführungsbeispiele anhand der Zeichnungen. Hierbei zeigen:
FIG.1: ein erstes Beispiel (nicht erfindungsgemäß) einer Stromversorgungsanordnung einer Leuchte mit einem über einen kabelgebundenen Datenbus angesteuerten Phasenwahlschalter;
FIG.2: ein zweites Beispiel (nicht erfindungsgemäß) einer Stromversorgungsanordnung einer Leuchte mit einem über einen kabelgebundenen Datenbus angesteuerten Phasenwahlschalter;
FIG.3: ein drittes Beispiel (nicht erfindungsgemäß)einer Stromversorgungsanordnung einer Leuchte mit einem über einen funkgebundenen Datenbus angesteuerten Phasenwahlschalter;
FIG.4: ein viertes Beispiel (nicht erfindungsgemäß)einer Stromversorgungsanordnung einer Leuchte mit einem selbsttätig angesteuerten Phasenwahlschalter;
FIG.5 ein fünftes Beispiel (nicht erfindungsgemäß)einer Leuchte mit einem Phasenwahlschalter und in einer ersten Variante zur Ermittlung der Leistungsaufnahme; sowie
FIG.6 ein erstes erfindungsgemäßes Ausführungsbeispiel einer Leuchte mit einem Phasenwahlschalter und in einer zweiten Variante zur Ermittlung der Leistungsaufnahme;
FIG.7 ein zweites erfindungsgemäßes Ausführungsbeispiel einer Leuchte mit einem über das Betriebsgerät angesteuerten Phasenwahlschalter; und
FIG.8 ein drittes erfindungsgemäßes Ausführungsbeispiel einer Leuchte mit einem in das Betriebsgerät integrierten Phasenwahlschalter.

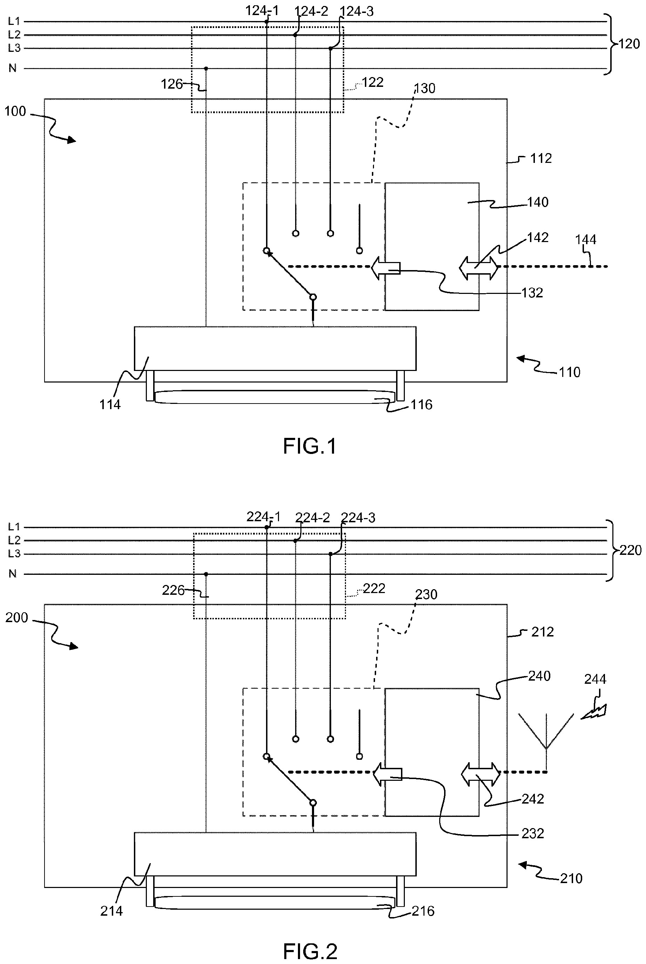

Zur Vermeidung unnötiger Wiederholung sind baugleiche bzw. funktionsgleiche Bestandteile in FIG.1-4 nachfolgend nicht zu jeder einzelnen Zeichnung jeweils wiederholt beschrieben, sondern mit Bezugszeichen versehen, welche gemäß der Figurennummer in der Hunderterstelle erhöht sind.

In FIG.1 ist schematisch ein erstes Beispiel einer Stromversorgungsanordnung 100 gezeigt. Die Stromversorgungsanordnung 100 dient zur Speisung einer Leuchte 110 und ist hierzu im Gehäuse 112 der Leuchte angeordnet. Bei der Leuchte 110 handelt es sich bevorzugt um eine Komponente eines umfangreichen Beleuchtungssystems mit einer Vielzahl einzelner Leuchten 110, vorzugsweise eine Schienenleuchte bzw. ein Leuchtenmodul eines Lichtbands.

Die Stromversorgungsanordnung 100 umfasst ein Betriebsgerät 114, welches die geeignete Versorgung von einem oder mehreren angeschlossenen Leuchtmitteln 116, beispielsweise zwei T5 Leuchtstofflampen, sicherstellt. Das Betriebsgerät 114 ist von herkömmlicher Bauart, zum Beispiel ein elektronisches Vorschaltgerät, und ist mit Einphasen-Wechselstrom zu versorgen. Zum Anschluss des Betriebsgeräts 114 an eine mehrphasige Versorgungsleitung 120 umfasst die Stromversorgungsanordnung 100 einen hier nur schematisch dargestellten elektrischen Verbinder 122. Der Verbinder 122 ermöglicht in dem in FIG.1 gezeigten Beispiel den Anschluss an eine Versorgungsleitung 120 mit drei Phasenleitern L1, L2, L3. Hierzu wird ein standardisierter Verbinder 122 für die Gebäudetechnik beispielsweise nach DIN VDE 0606-201(:2004-09) bevorzugt, etwa Steck-, Klemm- oder Schneidverbinder für gängige Flachband- oder Rundmantel-Leitungen. Der Verbinder 122 umfasst für jeden der mehreren Phasenleiter L1, L2, L3 einen entsprechenden Leitungsanschluss 124-1, 124-2, 124-3. Der mehrpolige Verbinder 122 hat weiter einen Anschluss 126 für den Neutral- bzw. Nullleiter N und kann gegebenenfalls einen weiteren Anschluss für einen Schutzleiter aufweisen, hier nicht gezeigt.

Zwischen den einzelnen Leitungsanschlüssen bzw. Leitungskontakten 124-1, 124-2, 124-3 des Verbinders 122 und dem Betriebsgerät 114 ist ein elektronisch steuerbarer Phasenwahlschalter 130 als separate Komponente vorgesehen. Der Phasenwahlschalter 130 kann zum Zwecke seiner elektronischen Ansteuerung in jeder geeigneten Weise realisiert werden, zum Beispiel elektromechanisch als Relais oder in Halbleitertechnik, etwa mit MOSFET-Leistungstransistoren.

Der Phasenwahlschalter 130 ist durch entsprechende Anschlüsse eingangsseitig jeweils an jeden der mehreren Leitungskontakte 124-1, 124-2, 124-3 angeschlossen und ausgangsseitig mit dem Phasenanschluss des Betriebsgeräts 114 verbunden. Wie aus FIG.1 schematisch ersichtlich hat der Phasenwahlschalter 130 zur wählbaren bzw. einstellbaren Verbindung mit einem Phasenleiter L1, L2, L3 für jeden der Leitungskontakte 124-1, 124-2, 124-3 eine entsprechende Schaltposition sowie zusätzlich eine Ausschaltstellung. In der Ausschaltstellung des Phasenwahlschalters 130 ist das Betriebsgerät 114 spannungsfrei geschaltet, um beispielsweise eine automatische Sicherheitsabschaltung zu ermöglichen.

Zur elektronischen Ansteuerung bzw. Betätigung umfasst der Phasenwahlschalter 130 einen rein schematisch dargestellten Steuereingang 132, welcher nicht zwingend als extern zugänglicher Anschluss, sondern auch innerhalb einer integrierten Schaltung ausgeführt sein kann.

Zur elektronischen Ansteuerung des Phasenwahlschalters 130 über den Steuereingang 132 ist als elektronische Steuereinheit eine integrierte Steuerschaltung 140, zum Beispiel ein Mikrocontroller, in der Stromversorgungsanordnung 100 vorgesehen.

Im Beispiel gemäß FIG.1 verfügt die Steuerschaltung 140 über eine digitale Schnittstelle, schematisch mit 142 bezeichnet, für einen kabelgebundenen Datenbus 144, der in an sich bekannter Art ausgeführt ist.

Die Steuerschaltung 140 kann autark bzw. selbsttätig entscheiden, welche Phase zur Versorgung des Betriebsgeräts 114 gewählt wird. Hierzu kann zum Beispiel der Mikrocontroller mit einem entsprechenden Auswahlalgorithmus programmiert werden. Zudem ist es auch möglich, über den kabelgebundenen Datenbus 144 Schaltbefehle, beispielsweise ausgehend von einer nicht gezeigten, externen Zentralsteuerung zu empfangen. Alternativ können auch mehrere Steuerschaltungen 140 im Verbund ein ad-hoc-Netz ohne Zentralsteuerung bilden und sich untereinander auf eine bestimmte Phasenwahl verständigen, um eine hinsichtlich der aktuellen Betriebssituation optimale Verteilung zu bewirken. Entsprechend der gewählten digitalen Schnittstelle 142 ist in der Steuerschaltung 140 programmiertechnisch ein entsprechendes Kommunikationsprotokoll zum Datenaustausch implementiert.

Die Steuerschaltung 140 erzeugt entweder aufgrund des Algorithmus selbsttätig bzw. autark oder aufgrund der über den Datenbus 144 empfangenen Daten ein entsprechendes elektronisches Steuersignal zur Ansteuerung des Steuereingangs 132 des Phasenwahlschalters 130. Der Phasenwahlschalter 130 kann als getrenntes Bauteil oder zusammen mit der Steuerschaltung 140 als integrierte Schaltung ausgeführt sein.

FIG.2 zeigt ein zweites Beispiel einer Stromversorgungsanordnung 200, welches sich vom Beispiel gemäß FIG.1 lediglich dadurch unterscheidet, dass die Steuerschaltung 140 eine Luftschnittstelle 242 aufweist und der Datenbus 244 entsprechend kabellos ausgeführt ist. So kann der Datenbus 244 über eine geeignete Funk- oder Infrarotverbindung, bspw. WLAN, Bluetooth, o.ä. realisiert werden, um zusätzliche Verkabelung zu vermeiden.

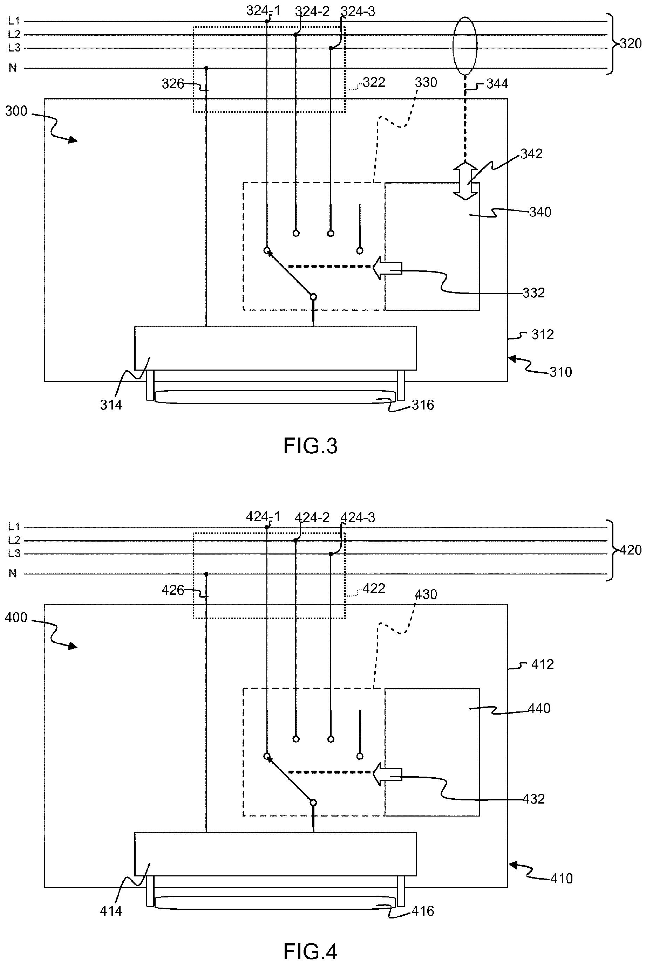

FIG. 3 zeigt eine weitere mögliche Variante einer Stromversorgungsanordnung 300, welche wie das Beispiel gemäß FIG.1 eine digitale Schnittstelle 342 zu einem kabelgebundenen Datenbus 344 aufweist. Der Unterschied zu FIG.1 besteht darin, dass die bereits vorhandene Versorgungsleitung 320 als Trägerleitung für den Datenbus 344 genutzt wird. Entsprechend ist die digitale Schnittstelle 342 in geeigneter Netzwerktechnik, etwa analog zum PowerLAN(dLAN, PCL)-Prinzip ausgeführt. Auch diese Lösung vermeidet somit eine zusätzliche Verkabelung.

FIG.4 zeigt eine weitere mögliche Variante einer Stromversorgungsanordnung 400, bei welcher ganz auf eine digitale Schnittstelle zur Kommunikation verzichtet wird. Die Ansteuerung des Phasenwahlschalters 430 erfolgt mit der Steuereinheit 440 aus FIG.4 ausschließlich autark bzw. unabhängig. Dies kann zum Beispiel durch einen zufallsbasierten Algorithmus durch entsprechende Programmierung der Steuerschaltung 440 erfolgen. Ein Datenbus ist somit bei dieser vereinfachten und insbesondere für sehr große Systeme geeigneten Lösung nicht vorhanden.

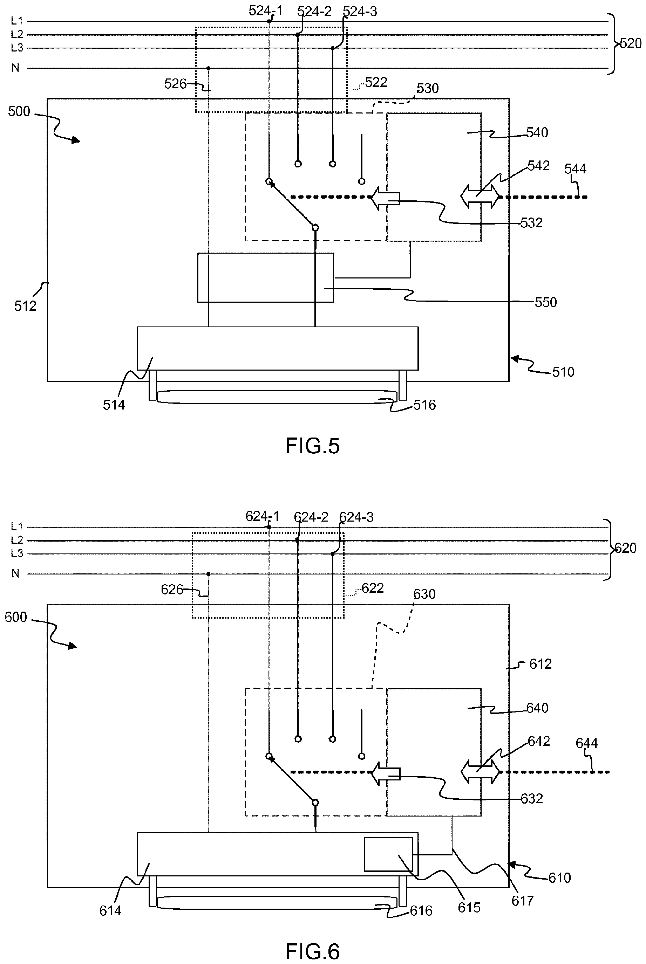

FIG.5 veranschaulicht eine Fortbildung der vorstehenden Beispiele, wobei die Stromversorgungsanordnung 500 bzw. die Leuchte 510 eine zusätzliche Leistungsmessschaltung 550 umfasst, welche z.B. in den Phasenwahlschalter 530 integriert oder als getrennte Komponente an diesen angeschlossen sein kann. Die Leistungsmessschaltung 550 ermittelt die Leistungsaufnahme des Betriebsgeräts 514 in bekannter Weise durch Strom- und Spannungsmessung am gewählten Phasenleiter 524-1... 524-3. Die Leistungsmessschaltung 550 ist mit der Steuerschaltung 540 verbunden. So kann die Steuerschaltung 540 auf Grundlage der ermittelten Leistungsaufnahme ggf. unter Berücksichtigung von über den funk- oder kabelgebundenen Datenbus 544 ausgetauschten Daten weiterer Leuchten bzw. weiterer Steuerschaltungen 540 und Information zur Lastsituation in der Beleuchtungsanlage insgesamt gewinnen und den Phasenwahlschalter 530 entsprechend zum Lastausgleich ansteuern.

FIG.6 veranschaulicht eine erfindungsgemäße Ausführung, wobei eine Ermittlung der Leistungsaufnahme unter Ausnutzung von bereits im Betriebsgerät 614 vorhandenen Funktionen erfolgt. Heutige EVG verfügen meist bereits über eine Stromu. Spannungsüberwachung am Leuchtmittel, z.B. zur Einhaltung der Lastgrenze des Betriebsgeräts 614. Unter Verwendung einer die Last messenden Betriebsgerätesteuerung 615 kann die Leistungsaufnahme des bzw. der Leuchtmittel an die Steuerschaltung 640 kommuniziert werden. Hierzu ist die vom Betriebsgerät 614 getrennt ausgeführte Steuereinheit 640, wie in FIG.6 gezeigt, mit dem Betriebsgerät 614 über eine Datenverbindung 617 verbunden, welche proprietär oder standardisiert ausgeführt sein kann.

Mit Leuchten 510, 610 gemäß FIG.5-6 erfolgt das Ermitteln der Leistungsaufnahme dezentral in den einzelnen Leuchten. Auf dieser Grundlage kann dann durch geeignete Phasenwahl in den einzelnen Leuchten 510, 610 die Belastung der Phasenleiter 524-1... 524-3; 624-1... 624-3 näherungsweise gleich verteilt werden. In einem entsprechenden Verfahren zur automatischen Phasenwahl wird die ermittelte Leistungsaufnahme einer Leuchte 510, 610 durch die Steuereinheit 540, 640 dieser Leuchte über die Datenverbindung 544, 644 den Steuereinheiten bzw. Steuerschaltungen 540, 640 der anderen Leuchten mitgeteilt. Gegebenfalls kann die jeweilige Lastinformation ergänzend oder alternativ auch einer zentralen Steuerung zur Auswertung übermittelt werden.

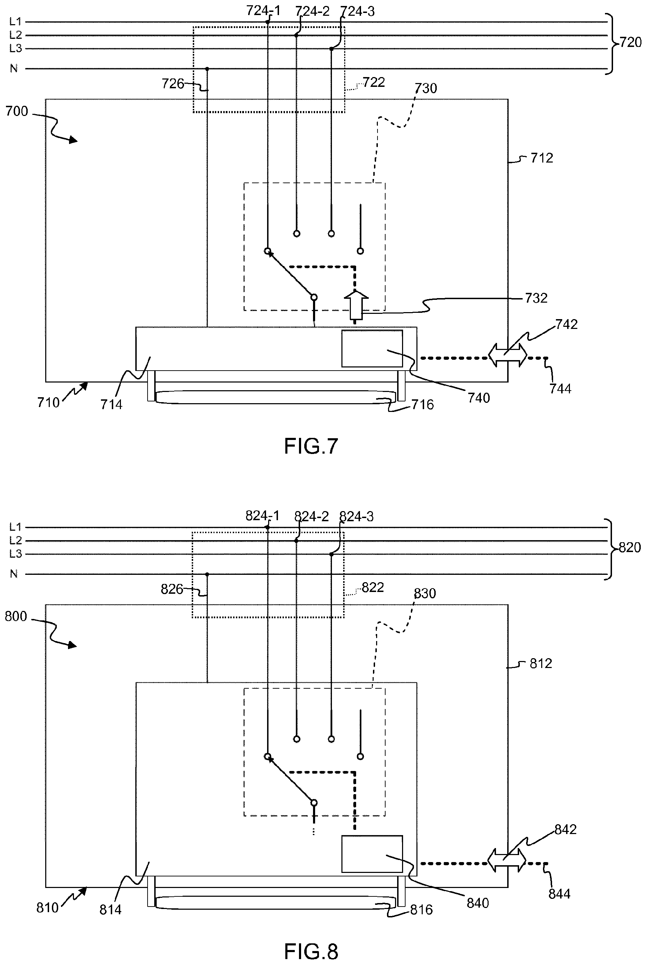

FIG.7 zeigt eine weitere erfindungsgemäße Variante einer Stromversorgungsanordnung 700, insbesondere basierend auf dem Ausführungsbeispiel nach FIG.6. In dieser Leuchte 710 ist die Steuereinheit 740 kein gesondertes Bauteil, sondern Bestandteil des Betriebsgeräts 714. Die Steuereinheit 740 kann z.B. als funktionale Einheit z.B. durch den zur Steuerung des Betriebsgeräts 714 ohnehin vorhandenen Mikrocontroller realisiert werden. Dementsprechend weist das Betriebsgerät 714 einen speziellen Steuerausgang auf, welcher mit dem Steuereingang 732 verbunden ist zur Ansteuerung des getrennt ausgeführten Phasenwahlschalters 730. Dementsprechend kann zur Datenverbindung eine digitale Schnittstelle 742 des Betriebsgerätes 714 genutzt werden, welche ebenfalls bereits vorhanden ist, z.B. eine DALI Schnittstelle des Betriebsgeräts 742.

FIG.8 zeigt schließlich eine weitere erfindungsgemäße Weiterbildung, insbesondere ausgehend von der Variante nach FIG.7, bei welcher auch der steuerbare Phasenwahlschalter 830 in das Betriebsgerät 814 integriert ist. Auch hier realisiert die Betriebsgerätesteuerung, insbesondere der typische Mikrocontroller des Betriebsgeräts 814, zweckmäßig auch die Funktion der elektronischen Steuereinheit 840 zum Ansteuern des Phasenwahlschalters 830. Analog zur Lösung nach FIG.7 erfolgt auch in der Leuchte 810 die Datenkommunikation betreffend den Lastausgleich bzw. die Phasenwahl über eine Schnittstelle 842 des Betriebsgerätes 814.

Bei allen vorgenannten Ausführungsformen ist es zweckmäßig, der Steuereinheit 140... 840 eine Hilfsversorgung bekannter Bauart zuzuordnen so, dass auch nach Sicherheitsabschaltung oder Verlust der Spannung auf dem aktuell gewählten Phasenleiter die Betriebsbereitschaft gewährleistet ist. Gegebenfalls kann eine Standby- oder Hilfsversorgung der Steuereinheit 140... 840 unter Ausnutzung des Datenbus 144... 844 realisiert werden.

### Bezugszeichenliste

FIG. 1
   - 100: Stromversorgungsanordnung
   - 110: Leuchte
   - 112: Leuchtengehäuse
   - 114: Betriebsgerät
   - 116: Lampe
   - 120: Versorgungsleitung
   - L1, L2, L3: Phasenleiter
   - N: Neutralleiter
   - 122: Verbinder
   - 124-1, ...-2, ...-3, 226: Leitungsanschluss
   - 130: Phasenwahlschalter
   - 132: Steuereingang
   - 140: Steuerschaltung
   - 142: digitale Schnittstelle
   - 144: Datenbus
FIG. 2
   - 200: Stromversorgungsanordnung
   - 210: Leuchte
   - 212: Leuchtengehäuse
   - 214: Betriebsgerät
   - 216: Lampe
   - 220: Versorgungsleitung
   - L1, L2, L3: Phasenleiter
   - N: Neutralleiter
   - 222: Verbinder
   - 224-1, ...-2, ...-3, 226: Leitungsanschluss
   - 230: Phasenwahlschalter
   - 232: Steuereingang
   - 240: Steuerschaltung
   - 242: digitale Schnittstelle
   - 244: Datenbus
FIG. 3
   - 300: Stromversorgungsanordnung
   - 310: Leuchte
   - 312: Leuchtengehäuse
   - 314: Betriebsgerät
   - 316: Lampe
   - 320: Versorgungsleitung
   - L1, L2, L3: Phasenleiter
   - N: Neutralleiter
   - 322: Verbinder
   - 324-1, ...-2, ...-3, 326: Leitungsanschluss
   - 330: Phasenwahlschalter
   - 332: Steuereingang
   - 340: Steuerschaltung
   - 342: digitale Schnittstelle
   - 344: Datenbus
FIG. 4
   - 400: Stromversorgungsanordnung
   - 410: Leuchte
   - 412: Leuchtengehäuse
   - 414: Betriebsgerät
   - 416: Lampe
   - 420: Versorgungsleitung
   - L1, L2, L3: Phasenleiter
   - N: Neutralleiter
   - 422: Verbinder
   - 424-1, ...-2, ...-3, 426: Leitungsanschluss
   - 430: Phasenwahlschalter
   - 432: Steuereingang
   - 440: Steuerschaltung
FIG. 5
   - 500: Stromversorgungsanordnung
   - 510: Leuchte
   - 512: Leuchtengehäuse
   - 514: Betriebsgerät
   - 516: Lampe
   - 520: Versorgungsleitung
   - L1, L2, L3: Phasenleiter
   - N: Neutralleiter
   - 522: Verbinder
   - 524-1, ...-2, ...-3, 226: Leitungsanschluss
   - 530: Phasenwahlschalter
   - 532: Steuereingang
   - 540: Steuerschaltung
   - 542: digitale Schnittstelle
   - 544: Datenbus
   - 550: Leistungsmessschaltung
FIG. 6
   - 600: Stromversorgungsanordnung
   - 610: Leuchte
   - 612: Leuchtengehäuse
   - 614: Betriebsgerät
   - 615: Betriebsgerätesteuerung
   - 616: Lampe
   - 617: Datenverbindung
   - 620: Versorgungsleitung
   - L1, L2, L3: Phasenleiter
   - N: Neutralleiter
   - 622: Verbinder
   - 624-1, ...-2, ...-3, 226: Leitungsanschluss
   - 630: Phasenwahlschalter
   - 632: Steuereingang
   - 640: Steuerschaltung
   - 642: digitale Schnittstelle
   - 644: Datenbus
FIG. 7
   - 700: Stromversorgungsanordnung
   - 710: Leuchte
   - 712: Leuchtengehäuse
   - 714: Betriebsgerät
   - 716: Lampe
   - 720: Versorgungsleitung
   - L1, L2, L3: Phasenleiter
   - N: Neutralleiter
   - 722: Verbinder
   - 724-1, ...-2, ...-3, 226: Leitungsanschluss
   - 730: Phasenwahlschalter
   - 732: Steuereingang
   - 740: Steuerschaltung
   - 742: digitale Schnittstelle
   - 744: Datenbus
FIG. 8
   - 800: Stromversorgungsanordnung
   - 810: Leuchte
   - 812: Leuchtengehäuse
   - 814: Betriebsgerät
   - 816: Lampe
   - 820: Versorgungsleitung
   - L1, L2, L3: Phasenleiter
   - N: Neutralleiter
   - 822: Verbinder
   - 824-1, ...-2, ...-3, 226: Leitungsanschluss
   - 830: Phasenwahlschalter
   - 840: Steuereinheit
   - 842: digitale Schnittstelle
   - 844: Datenbus

## Patentansprüche

1. Leuchte (610,710, 810), insbesondere Lichtbandmodul, mit einem Leuchtengehäuse (612, 712, 812) für mindestens ein Leuchtmittel und einer im Leuchtengehäuse angeordneten Stromversorgungsanordnung (600, 700, 800) mit Phasenwahl für die Leuchte, die Stromversorgungsanordnung umfassend:
ein Betriebsgerät (614, 714, 814) für ein oder mehrere Leuchtmittel umfassend eine digitale Schnittstelle (642, 742, 842) zur Datenverbindung des Betriebsgeräts mit einer Zentralsteuerung über einen digitalen Datenbus, insbesondere über einen DALI-Bus;
einen Verbinder (622, 722, 822) zum Anschluss an eine mehrphasige Versorgungsleitung (620, 720, 820) mit mehreren Phasenleitern (L1, L2, L3); und
eine Vorrichtung zur Phasenwahl zum wahlweisen Verbinden des Betriebsgeräts mit einem bestimmten Phasenleiter der mehrphasigen Versorgungsleitung;
**dadurch gekennzeichnet, dass**
die Vorrichtung zur Phasenwahl als elektronisch steuerbarer Phasenwahlschalter (630, 730, 830) ausgeführt ist und einen Steuereingang (632, 732) aufweist, so dass der Phasenleiter, welcher zur einphasigen Versorgung des Betriebsgeräts bestimmt ist, durch elektronische Ansteuerung über den Steuereingang wählbar ist;
und **dass** das Betriebsgerät eine elektronische Steuereinheit (740, 840) zur Ansteuerung des Phasenwahlschalters (730, 830) über dessen Steuereingang (732) aufweist oder mit einer elektronischen Steuereinheit (640) zur Ansteuerung des Phasenwahlschalters (630) über den Steuereingang (632) des Phasenwahlschalters verbunden ist;
wobei die elektronische Steuereinheit (640, 740, 840) die Anbindung der Stromversorgungsschaltung (600, 700, 800) an den digitalen Datenbus (644, 744, 844) ermöglicht.

2. Leuchte mit Phasenwahl nach Anspruch 1, **dadurch gekennzeichnet, dass** die Stromversorgungsanordnung (600) Mittel zur Ermittlung der Leistungsaufnahme des Betriebsgeräts oder des einen bzw. der mehreren Leuchtmittel aufweist, insbesondere eine zur Lastmessung geeignete Betriebsgerätesteuerung (615) im Betriebsgerät.

3. Leuchte mit Phasenwahl nach einem der Ansprüche 1 bis 2, **dadurch gekennzeichnet,**
**dass** das Betriebsgerät (714) die elektronische Steuereinheit (740) umfasst und das Betriebsgerät (714) einen Steuerausgang zur Ansteuerung des Phasenwahlschalters (730) aufweist; oder
**dass** die Steuereinheit (640) vom Betriebsgerät getrennt ausgeführt ist und mit dem Betriebsgerät (614) über eine Datenverbindung (617) verbunden ist; oder
**dass** der steuerbare Phasenwahlschalter (830) in das Betriebsgerät (814) integriert ist und eine Betriebsgerätesteuerung, insbesondere ein Mikrocontroller des Betriebsgeräts, die elektronische Steuereinheit (840) bildet.

4. Leuchte mit Phasenwahl nach einem der Ansprüche 1 bis 3, **dadurch gekennzeichnet, dass** der Phasenwahlschalter (630, 730, 830) eine Ausschaltstellung aufweist, bei welcher das Betriebsgerät (614, 714, 814) spannungsfrei geschaltet ist.

5. Verfahren zur automatischen Phasenwahl in einem Beleuchtungssystem mit mehreren Leuchten nach einem der Ansprüche 1 bis 4, wobei jede Leuchte ein Betriebsgerät aufweist und an eine mehrphasige Versorgungsleitung angeschlossen ist, das Verfahren umfassend:
Ermittlung der Verfügbarkeit oder des Belastungszustands der einzelnen Phasenleiter der Versorgungsleitung;
elektronische Ansteuerung des Phasenwahlschalters durch das Betriebsgerät jeder Leuchte zur Auswahl eines verfügbaren Phasenleiters, so dass alle Leuchten von einem spannungsführenden Phasenleiter versorgt werden.

6. Verfahren zur automatischen Phasenwahl nach Anspruch 5, **dadurch gekennzeichnet, dass** die Ermittlung des Belastungszustands der einzelnen Phasenleiter der Versorgungsleitung und/oder die Ermittlung der Verfügbarkeit der einzelnen Phasenleiter der Versorgungsleitung dezentral erfolgt, insbesondere anhand von Mitteln zur Ermittlung der Leistungsaufnahme in der jeweiligen Stromversorgungsanordnung der einzelnen Leuchten.

7. Verfahren zur automatischen Phasenwahl Anspruch 5 und/oder 6, **gekennzeichnet durch** Ermittlung der Verfügbarkeit und/oder der Belastung der einzelnen Phasenleiter sowie Ansteuerung jeder Leuchte **durch** eine Zentralsteuerung, mit welcher die Stromversorgungsanordnung jeder Leuchte über einen Datenbus verbunden ist.

8. Verfahren zur automatischen Phasenwahl nach Anspruch 6 oder 7, **gekennzeichnet durch** Ermitteln der Leistungsaufnahme in den einzelnen Leuchten und **durch** die elektronische Ansteuerung des Phasenwahlschalters jeder Leuchte zur Auswahl eines Phasenleiters auf Grundlage der ermittelten Leistungsaufnahmen der einzelnen Leuchten so, dass eine über die Phasenleiter näherungsweise gleich verteilte Belastung erzielt wird.

9. Verfahren zur automatischen Phasenwahl nach Anspruch 6, 7 oder 8, **dadurch gekennzeichnet, dass** die ermittelte Leistungsaufnahme einer Leuchte durch die Steuereinheit dieser Leuchte anhand einer Datenverbindung übermittelt wird.

10. Beleuchtungssystem, insbesondere Lichtband, zur automatischen Phasenwahl mit mehreren Leuchten nach einem der Ansprüche 1 bis 4.

## Claims

1. A luminaire (610, 710, 810), in particular continuous line module, having a luminaire housing (612, 712, 812) for at least one lighting means and a power supply arrangement (600, 700, 800) with phase selection for the luminaire arranged in the luminaire housing, the power supply arrangement comprising:
a driver device (614, 714, 814) for one or more lighting means, comprising a digital interface (642, 742, 842) for data connection of the driver device to a central controller via a digital data bus, in particular via a DALI bus;
a connector (622, 722, 822) for connection to a multi-phase supply line (620, 720, 820) having a plurality of phase conductors (L1, L2, L3); and
a phase selection device for selectively connecting the driver device to one particular phase conductor of the multi-phase supply line;
**characterized in that**
the phase selection device is configured as an electronically controllable phase selection switch (630, 730, 830) and has a control input (632, 732) so that the phase conductor, which is intended for single-phase supply to the driver device, can be selected by electronic control via the control input;
and that
the driver device has an electronic control unit (740, 840) for controlling the phase selection switch (730, 830) via its control input (732) or is connected to an electronic control unit (640) for controlling the phase selection switch (630) via the control input (632) of the phase selection switch;
wherein the electronic control unit (640, 740, 840) enables the power supply circuit (600, 700, 800) to be connected to the digital data bus (644, 744, 844).

2. The luminaire with phase selection according to claim 1, **characterized in that** the power supply arrangement (600) has means for determining the power consumption of the driver device or of the one or more lighting means, in particular a driver device control system (615) suitable for load measurement in the driver device.

3. The luminaire with phase selection according to one of claims 1 to 2, **characterized**
**in that** the driver device (714) comprises the electronic control unit (740) and the driver device (714) has a control output for driving the phase selection switch (730); or
**in that** the control unit (640) is configured separately from the driver device and is connected to the driver device (614) via a data link (617); or
**in that** the controllable phase selection switch (830) is integrated into the driver device (814) and in that a driver device controller, in particular a microcontroller of the driver device, forms the electronic control unit (840).

4. The luminaire with phase selection according to one of claims 1 to 3, **characterized in that** the phase selection switch (630, 730, 830) has a switch-off position in which the driver device (614, 714, 814) is disconnected from the power supply.

5. A method for automatic phase selection in a multi-luminaire lighting system having a plurality of luminaires according to any one of claims 1 to 4, each luminaire having a driver device and being connected to a multi-phase supply line, the method comprising:
determination of the availability or the load state of the individual phase conductors of the supply line;
electronic control of the phase selection switch by the driver device of each luminaire to select an available phase conductor so that all the luminaires are supplied by a live phase conductor.

6. The method for automatic phase selection according to claim 5, **characterised in that** the load state of the individual phase conductors of the supply line and/or the availability of the individual phase conductors of the supply line is determined decentrally, in particular by means for determining the power consumption in the respective power supply arrangement of the individual luminaires.

7. The method for automatic phase selection Claim 5 and/or 6, **characterised by** determining the availability and/or the load of the individual phase conductors and controlling each luminaire by a central controller to which the power supply arrangement of each luminaire is connected via a data bus.

8. The method for automatic phase selection according to claim 6 or 7, **characterised by** determining the power consumption in the individual luminaires and by electronically controlling the phase selection switch of each luminaire to select a phase conductor on the basis of the determined power consumption of the individual luminaires in such a way that a load distributed approximately equally over the phase conductors is achieved.

9. The method for automatic phase selection according to claim 6, 7 or 8, **characterised in that** the determined power consumption of a luminaire is transmitted by the control unit of this luminaire by means of a data link.

10. A lighting system, in particular a continuous line module, for automatic phase selection comprising a plurality of luminaires in accordance with any one of claims 1 to 4.

## Revendications

1. Un luminaire (610, 710, 810), en particulier module de luminaire en ligne continue, comportant un boîtier de luminaire (612, 712, 812) pour au moins un moyen d'éclairage et un dispositif d'alimentation électrique (600, 700, 800) avec sélection de phase pour le luminaire disposé dans le boîtier de luminaire, le dispositif d'alimentation électrique comportant :
un dispositif de commande (614, 714, 814) pour un ou plusieurs moyens d'éclairage, comprenant une interface numérique (642, 742, 842) pour la connexion de données du dispositif de commande à une commande centrale via un bus de données numériques, en particulier via un bus DALI ;
un connecteur (622, 722, 822) destiné à être connecté à une ligne d'alimentation multiphase (620, 720, 820) ayant une pluralité de conducteurs de phase (L1, L2, L3) ; et
un dispositif de sélection de phase pour connecter sélectivement le dispositif de commande à un conducteur de phase particulier de la ligne d'alimentation multiphase ;
**caractérisé en ce que**
le dispositif de sélection de phase est configuré comme un commutateur de sélection de phase à commande électronique (630, 730, 830) et possède une entrée de commande (632, 732) de sorte que le conducteur de phase, qui est destiné à l'alimentation monophasée du dispositif de commande, peut être sélectionné par commande électronique via l'entrée de commande ; et que
le dispositif de commande comporte une unité de commande électronique (740, 840) pour commander le commutateur de sélection de phase (730, 830) via l'entrée de commande (732) de ce dernier ou est connecté à une unité de commande électronique (640) pour commander le commutateur de sélection de phase (630) via l'entrée de commande (632) du commutateur de sélection de phase ;
l'unité de commande électronique (640, 740, 840) permettant de connecter le dispositif d'alimentation (600, 700, 800) au bus de données numériques (644, 744, 844).

2. Luminaire à sélection de phase selon la revendication 1, **caractérisé en ce que** le dispositif d'alimentation (600) présente des moyens pour déterminer la consommation d'énergie du dispositif d'attaque ou d'un ou plusieurs moyens d'éclairage, en particulier un système de commande (615) du dispositif de commande, adapté pour mesurer la charge dans le dispositif de commande.

3. Luminaire avec sélection de phase selon l'une des revendications 1 à 2, **caractérisé en ce que**
le dispositif de commande (714) comprend l'unité de commande électronique (740) et que le dispositif de commande (714) a une sortie de commande pour commander le commutateur de sélection de phase (730) ; ou
**en ce que** l'unité de commande (640) est configurée séparément du dispositif de commande et est reliée au dispositif de commande (614) par une liaison de données (617) ; ou
**en ce que** le commutateur de sélection de phase (830) est intégré dans le dispositif de commande (814) et **en ce qu'**un contrôleur du dispositif de commande, en particulier un microcontrôleur du dispositif de commande, forme l'unité de commande électronique (840).

4. Luminaire avec sélection de phase selon l'une des revendications 1 à 3, **caractérisé en ce que** le commutateur de sélection de phase (630, 730, 830) présente une position de déconnexion dans laquelle le dispositif de commande (614, 714, 814) est déconnecté de l'alimentation électrique.

5. Procédé de sélection automatique de phase dans un système d'éclairage à luminaires multiples ayant une pluralité de luminaires selon l'une quelconque des revendications 1 à 4, chaque luminaire ayant un dispositif de commande et étant connecté à une ligne d'alimentation multiphase, le procédé comprenant :
détermination de la disponibilité ou de l'état de charge des différents conducteurs de phase de la ligne d'alimentation ;
commande électronique du commutateur de sélection de phase par le dispositif de commande de chaque luminaire pour sélectionner un conducteur de phase disponible afin que tous les luminaires soient alimentés par un conducteur de phase sous tension.

6. Procédé de sélection automatique de phase selon la revendication 5, **caractérisé en ce que** l'état de charge des différents conducteurs de phase de la ligne d'alimentation et/ou la disponibilité des différents conducteurs de phase de la ligne d'alimentation est déterminé(e) de manière décentralisée, en particulier par des moyens pour déterminer la puissance absorbée dans le dispositif d'alimentation respectif des différents luminaires.

7. Procédé de sélection automatique de phase selon les revendications 5 et/ou 6, caractérisé en ce par l'étape de déterminer la disponibilité et/ou la charge des conducteurs de phase individuels et à commander chaque luminaire par une commande centrale à laquelle le dispositif d'alimentation électrique de chaque luminaire est relié par un bus de données.

8. Procédé de sélection automatique de phase selon la revendication 6 ou 7, **caractérisé par** les étapes de déterminer la puissance absorbée dans les différents luminaires et de commander électroniquement le commutateur de sélection de phase de chaque luminaire pour sélectionner un conducteur de phase sur la base de la puissance absorbée déterminée des différents luminaires, de manière à obtenir une charge répartie de manière approximative égale entre les conducteurs de phase.

9. Procédé de sélection automatique de phase selon la revendication 6, 7 ou 8, **caractérisé en ce que** la puissance absorbée déterminée d'un luminaire est transmise par l'unité de commande de ce luminaire au moyen d'une liaison de données.

10. Système d'éclairage, en particulier module de luminaire en ligne continue, pour sélection automatique de phase, comprenant une pluralité de luminaires selon l'une quelconque des revendications 1 à 4.
